# EUROPEAN PATENT APPLICATION

(11) **EP 2 116 577 A1**
(43) Date of publication of application: **11.11.2009**
(21) Application number: 08720720.5
(22) Date of filing: 13.02.2008
(51) Int. Cl.: C09B 23/00, B41M 5/26, C09B 45/14, C09B 45/20, G11B 7/244

(54) **CYANINE DYE AND OPTICAL RECORDING MEDIUM**

(30) Priority: 28.02.2007 JP 2007049968
(71) Applicant: Mitsubishi Kagaku Media Co., Ltd., Tokyo 108-8415 (JP); Kabushiki Kaisha Hayashibara Seibutsu Kagaku Kenkyujo, Okayama-shi Okayama 700-0907 (JP)
(72) Inventor: SHODA, Hisashi, Kanagawa 227-8502 (JP); UCHIDA, Naoyuki, Tokyo 108-8415 (JP); FUROMOTO, Shigeyuki, Tokyo 108-8415 (JP); AIZAWA, Yasushi, Okayama 700-0907 (JP); DAN-OH, Yasufumi, Okayama 700-0907 (JP); TOKI, Masahiko, Okayama 700-0907 (JP)
(74) Representative: Merkle, Gebhard
(86) International application number: PCT/JP2008/052368
(87) International publication number: WO 2008/105238

(57) **Abstract**

To provide an optical recording medium on which recording/retrieving of high density optical information is possible by a short wavelength light such as a blue laser. An optical recording medium comprising a substrate and a recording layer capable of recording or retrieving information by irradiation with light, formed on the substrate, wherein the recording layer contains the cyanine dye represented by the following formula (I): 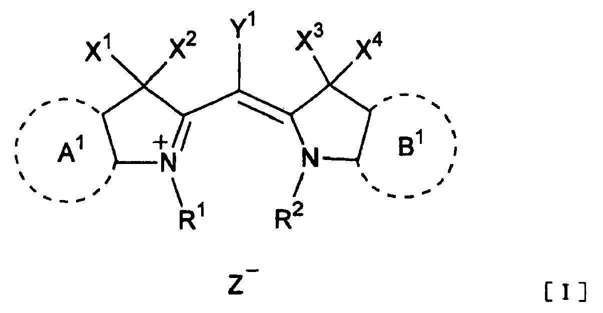 wherein each of A¹ and B¹ which are independent of each other, is an aromatic ring which may have a substituent, provided that at least one aromatic ring of A¹ and B¹ contains a nitrogen atom; each of R¹ and R² which are independent of each other, is a substituent, provided that R¹ and/or R² may be bonded to other cation; each of X¹, X², X³ and X⁴ which are independent of one another, is an organic group, provided that a pair of X¹ and X², and/or a pair of X³ and X⁴, may be mutually bonded to form a cyclic structure; Y¹ is a hydrogen atom or an organic group; and Z- is an anion.

## Description

### TECHNICAL FIELD

The present invention relates to a novel monomethine cyanine dye having an azaindolenine skeleton and an optical recording medium using it. More particularly, it relates to a novel monomethine cyanine dye having an azaindolenine skeleton suitably used for a recording layer of an optical recording medium capable of recording and retrieving by blue laser and excellent in durability, and an optical recording medium using it.

### BACKGROUND ART

Along with the coming of the information age, demands for an organic compound which absorbs light in the ultraviolet region to the infrared region are increasing. Its application expands from an application utilizing properties of an organic compound to absorb and thus shut off light, to an application positively utilizing energy of light by means of the organic compound, such as information recording and photovoltaic power generation, as in the case of a material for a filter.

In the field of the information recording, along with the coming of the multimedia age, optical recording media such as CD-R (recordable CD) and DVD-R (recordable DVD) attract attention. Such optical recording media are roughly classified into magnetooptical recording media, phase-change recording media, chalcogene oxide optical recording media and organic optical recording media. Among them, organic dye type optical recording media having a recoding layer containing an organic dye are considered to be superior, since they can be produced at a low cost easily.

The urgent objects in the organic optical recording media are further high densification of the recording density and speeding up of the recording rate to cope with the multimedia age. For the high densification of the recording density, the wavelength of the recording and retrieving light is shortened. Further, for the speeding up of the recording rate, use of a more sensitive dye is desired. However, the increase in the sensitivity of a dye tends to involve an increase in a deviation (jitter) of retrieving signals in the time direction and a decrease in light stability (light resistance), and with a conventional dye, it tends to be difficult to sufficiently satisfy all the sensitivity, the jitter and the light stability.

In recent years, an optical recording medium capable of recording and retrieving at a high density using a laser beam having a short oscillation wavelength such as a blue laser beam which has been actively developed, has been proposed. Several proposals have been made regarding an optical recording medium for which blue laser is employed, such as a Blu-ray Disk and HD DVD (High Definition DVD), but a recording apparatus and recording conditions are not standardized yet, and an image of a preferred optical recording medium does not appear yet at present.

Under these circumstances, for example, the following Patent Documents 1 to 4 disclose an organic dye for a recording layer of an optical recording medium capable of recording/retrieving of information by a laser beam having a short oscillation wavelength at a wavelength of from about 405 to about 430 nm. However, the conventional organic dye for a blue laser as disclosed in Patent Documents 1 to 4 cannot cope with the high densification and the speeding up by the increase in sensitivity which are required at present, and a sufficient recording sensitivity can hardly be obtained.

Further, Patent Documents 5 to 7 disclose an example wherein a monomethine cyanine dye is used as an optical recording material, but the cyanine dye as disclosed cannot sufficiently cope with the high densification and the increase in sensitivity of an optical recording medium.

The measure of high sensitivity is a recording sensitivity of at most 8 mW in recording in accordance with HD DVD-R standard at a recording linear velocity of 6.61 m/sec at a laser wavelength of 405 nm with NA (numerical aperture) of 0.65. This means that the 2x speed recording is possible at a recording power of at most 12 mW which a conventional blue semiconductor laser can provide, considering that the recording sensitivity at the time of the 2x speed recording (13.22 m/s) is √2 times that of the 1× speed recording.

Further, in the case of a double-layer recording medium, the recording sensitivity at the time of recording under 1× speed recording conditions should be at most 12 mW, considering the energy of the applied laser is distributed to portion other than the aimed recording layer.
Patent Document 1: JP-A-11-105423
Patent Document 2: JP-A-11-78239
Patent Document 3: WO2006/035554
Patent Document 4: JP-A-2001-301333
Patent Document 5: WO2001/044374
Patent Document 6: JP-A-2006-044277
Patent Document 7: JP-A-2005-297406

### DISCLOSURE OF THE INVENTION

### OBJECT TO BE ACCOMPLISHED BY THE INVENTION

The present invention has been made to overcome the above problems and its object is to provide an optical recording medium capable of high speed and high density optical information recording/retrieving by a short wavelength light such as a blue laser beam and to provide a novel dye suitably used for such an optical recording medium.

### MEANS TO ACCOMPLISH THE OBJECT

The present inventors have conducted extensive studies and as a result, have found that high speed and high density optical information recording/retrieving is possible by a short wavelength light such as a blue laser beam by using a monomethine cyanine dye having a specific structure for a recording layer of an optical recording medium, and particularly, practical application of a new optical recording medium by low to high recording is possible, and accomplished the present invention.

That is, the present invention provides the following.
(1) A cyanine dye represented by the following formula (I): 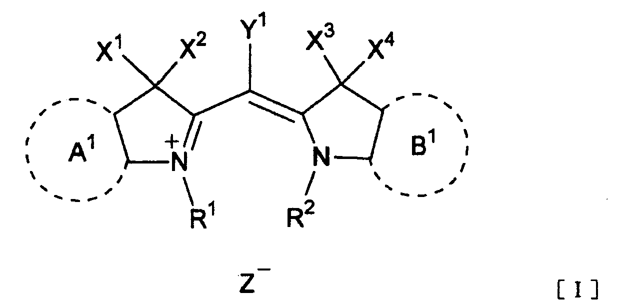 wherein each of A¹ and B¹ which are independent of each other, is an aromatic ring which may have a substituent, provided that at least one aromatic ring of A¹ and B¹ contains a nitrogen atom; each of R¹ and R² which are independent of each other, is a substituent, provided that R¹ and/or R² may be bonded to other cation; each of X¹, X², X³ and X⁴ which are independent of one another, is an organic group, provided that a pair of X¹ and X², and/or a pair of X³ and X⁴, may be mutually bonded to form a cyclic structure; Y¹ is a hydrogen atom or an organic group; and Z- is an anion.
(2) The cyanine dye according to the above (1), wherein in the formula (I), Z⁻ is an anion of an azo metal complex.
(3) The cyanine dye according to the above (1) or (2), wherein in the formula (I), at least one of X¹, X², X³ and X⁴ is an alkyl group substituted by a heterocyclic ring or an aromatic ring.
(4) The cyanine dye according to the above (1) or (2), wherein in the formula (I), A¹ is a benzene ring, B¹ is a pyridine ring, and one of X¹, X², X³ and X⁴ is an alkyl group substituted by an aromatic ring.
(5) The cyanine dye according to the above (4), wherein in the formula (I), X¹, X², X³ and X⁴ other than X¹, X², X³ or X⁴ which is the alkyl group substituted by an aromatic ring, and R¹ and R², are C₁₋₃ alkyl groups, and Y¹ is a hydrogen atom.
(6) The cyanine dye according to the above (5), wherein in the formula (I), either one of X¹ and X² is an alkyl group substituted by an aromatic ring.
(7) An optical recording medium comprising a substrate and a recording layer capable of recording or retrieving information by irradiation with light, formed on the substrate, wherein the recording layer contains the cyanine dye as defined in any one of the above (1) to (6).
(8) The optical recording medium according to the above (7), on which recording and retrieving are carried out by light having a wavelength of at least 300 nm and at most 500 nm.

### EFFECTS OF THE INVENTION

According to the optical recording medium of the present invention and the cyanine dye of the present invention, high speed and high density optical information recording/retrieving is possible by a short wavelength light such as a blue laser beam. Further, recording/retrieving of optical information at a high density by low to high recording, which is a recording mechanism as different from conventional one, is possible.

### BRIEF DESCRIPTION OF THE DRAWINGS

Fig. 1(a) is a partial cross-section schematically illustrating one example of a layer structure of an optical recording medium according to a first embodiment of the present invention, and Fig. 1(b) is a partial cross-section schematically illustrating one example of a layer structure of an optical recording medium according to a second embodiment of the present invention.
Figs. 2(a) to (f) are views illustrating a process for producing a double-layer optical recording medium according to a third embodiment of the present invention.

### MEANINGS OF SYMBOLS

- 1:: substrate,
- 2:: recording layer,
- 3:: reflective layer,
- 4:: protective layer,
- 5:: protective coating film,
- 10, 20: optical recording medium,
- L:: laser beam,
- 201:: first substrate,
- 202:: first recording layer,
- 203:: first reflective layer,
- 204:: interlayer,
- 204a:: ultraviolet-curable resin layer,
- 205:: second recording layer,
- 206:: second reflective layer,
- 207:: adhesive layer,
- 208:: second substrate (mirror substrate),
- 209:: resin stamper

### BEST MODE FOR CARRYING OUT THE INVENTION

The present invention will be described in detail below. However, the present invention is by no means restricted to the following description, and various changes and modifications are possible within the scope of the present invention.

The optical recording medium of the present invention comprises a substrate and a recording layer capable of recording or retrieving of information by irradiation with light, formed on the substrate, wherein the recording layer contains a cyanine dye represented by the after-mentioned formula (I). In the following description, first, the cyanine dye contained in the recording layer of the optical recording medium of the present invention will be described, and then the optical recording medium of the present invention will be described.

### I. CYANINE DYE

The optical recording medium of the present invention contains in its recording layer a cyanine dye represented by the following formula (I) (hereinafter sometimes referred to simply as "the cyanine dye of the formula (I)).

The cyanine dye of the formula (I) is a dye compound suitable for recording by a blue laser beam and having light stability with which it can withstand practical use, since it has appropriate absorption in a blue light region at a wavelength of from 350 nm to 530 nm: 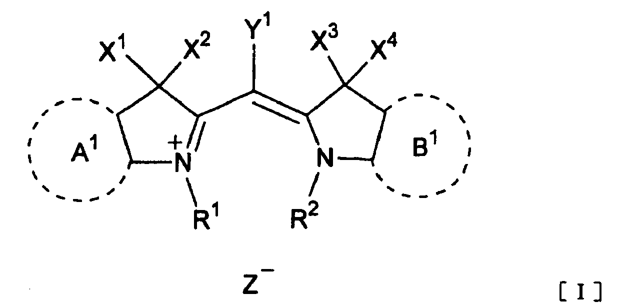 wherein each of A¹ and B¹ which are independent of each other, is an aromatic ring which may have a substituent, provided that at least one aromatic ring of A¹ and B¹ contains a nitrogen atom; each of R¹ and R² which are independent of each other, is a substituent, provided that R¹ and/or R² may be bonded to other cation; each of X¹, X², X³ and X⁴ which are independent of one another, is an organic group, provided that a pair of X¹ and X², and/or a pair of X³ and X⁴, may be mutually bonded to form a cyclic structure; Y¹ is a hydrogen atom or an organic group; and Z⁻ is an anion.

Now, the above formula (I) will be described below.

In the above formula (I), each of A¹ and B¹ which are independent of each other, is an aromatic ring which may have a substituent. However, at least one aromatic ring of A¹ and B¹ contains a nitrogen atom.

The aromatic ring containing a nitrogen atom may be either A¹ or B¹, or may be both A¹ and B¹.1. It is more preferred that one of A¹ and B¹ is an aromatic ring containing no nitrogen and the other one is an aromatic ring containing nitrogen.

The structure of the aromatic ring is not limited, and an aromatic ring having usually at least 6 and usually at most 13, preferably at most 10 carbon atoms in the ring may be mentioned. Specifically, the aromatic ring may, for example, be a benzene ring, a naphthalene ring, an anthracene ring or a phenanthrene ring. Among them, suitable is a benzene ring.

Further, the aromatic ring containing a nitrogen atom includes all the structures in which at least one carbon atom constituting such an aromatic ring is replaced with a nitrogen atom, and the substitution position and the number of substitution are not limited, but preferred is a ring substituted by from 1 to 2 nitrogen atoms. Specifically, the aromatic ring containing a nitrogen atom may, for example, be a pyridine ring, a pyrazine ring, a quinoline ring, an isoquinoline ring or a dictamnine ring. Among them, suitable for the application to an optical recording medium is a pyridine ring.

The substituent which the aromatic ring as A¹ and B¹ may have is not limited, and it may, for example, be an aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; an alicyclic hydrocarbon group such as a cyclopropyl group, a cyclobutyl group, a cyclopentyl group, a cyclohexyl group or a cyclohexenyl group; an aromatic hydrocarbon group such as a phenyl group, an o-tolyl group, a m-tolyl group, a p-tolyl group, a xylyl group, a mesityl group, an o-cumenyl group, a m-cumenyl group, a p-cumenyl group or a biphenylyl group; an alkoxy group or an aryloxy group such as a methoxy group, an ethoxy group, a propoxy group, an isopropoxy group, a butoxy group, an isobutoxy group, a sec-butoxy group, a tert-butoxy group, a pentyloxy group or a phenoxy group; an ester group such as a methoxycarbonyl group, an ethoxycarbonyl group, a propoxycarbonyl group, a butoxycarbonyl group, an acetyl group or a benzoyloxy group; a non-substituted or substituted amino group such as an amino group, a methylamino group, a dimethylamino group, an ethylamino group, a diethylamino group, a propylamino group, a dipropylamino group, an isopropylamino group, a diisopropylamino group, a butylamino group, a dibutylamino group, an isobutylamino group, a diisobutylamino group, a sec-butylamino group, a tert-butylamino group, a pentylamino group, a dipentylamino group, an anilino group, an o-toluidino group, a m-toluidino group, a p-toluidino group, a xylidino group or a diphenylamino group; a heterocyclic group such as a quinolyl group, a piperidino group, a pyridyl group or a morpholino group; a halogen group such as a fluoro group, a chloro group, a bromo group or a iodine group; a hydroxyl group; a carboxyl group; a sulfonic acid group; a cyano group; a nitro group; or a substituent comprising a combination of two or more of the above-exemplified substituents. The aromatic ring as A¹ and B¹ is preferably not substituted.

In the above formula (I), each of R¹ and R² which are independent of each other, is a substituent. Specifically, each of R¹ and R² which are independent of each other, is preferably an aliphatic hydrocarbon group or an aromatic hydrocarbon group.

The aliphatic hydrocarbon group is not limited, but it preferably has at least 1 and at most 12 carbon atoms, more preferably at least 1 and at most 6 carbon atoms.

The aliphatic hydrocarbon group may, for example, be an aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; or an alicyclic hydrocarbon group such as a cyclopropyl group, a cyclobutyl group, a cyclopentyl group, a cyclohexyl group or a cyclohexenyl group.

The aromatic hydrocarbon group is not limited but it preferably has at least 6 and at most 12 carbon atoms, more preferably 6 carbon atoms.

The aromatic hydrocarbon group may, for example, be a phenyl group, an o-tolyl group, a m-tolyl group, a p-tolyl group, a xylyl group, a mesityl group, an o-cumenyl group, a m-cumenyl group, a p-cumenyl group, a biphenylyl group, a benzyl group or a phenethyl group.

Such an aliphatic hydrocarbon group or an aromatic hydrocarbon group may further have a substituent. The substituent may, for example, be the same substituent as in A¹ and B¹.

Each of R¹ and R² is preferably an alkyl group, more preferably a C₁₋₃ alkyl group, most preferably a methyl group.

Each of R¹ and R² may be connected with other cation. Such other cation may be a cation of a cyanine dye such as the after-mentioned exemplified compounds (31) to (34).

When R¹ or R² is connected with a cation of other cyanine dye, the connection position is not limited, but in view of the production cost, it is preferably bonded to a nitrogen atom of a cyanine dye to be connected.

The chain length of the bivalent connecting group is, as the number of the constituting atom such as a carbon atom, usually at least 1, preferably at least 3, and usually at most 9, preferably at most 8, in view of easiness of preparation of the methine dye and the solubility of the methine dye in an organic solvent.

In such a bivalent connecting group, within a range not to depart from the object of the present invention, at least one hydrogen atom may be substituted by e.g. an amino group, a carboxyl group, a cyano group, a nitro group, a halogen group or a hydroxyl group.

In the above formula (I), each of X¹, X², X³ and X⁴ which are independent of one another, is an organic group. Specifically, it is preferred that each of X¹, X², X³ and X⁴ which are independent of one another, is an aliphatic hydrocarbon group or an aromatic hydrocarbon group.

The aliphatic hydrocarbon group is not limited, but it preferably has at least 1 and at most 12 carbon atoms, more preferably at least 1 and at most 6 carbon atoms.

The aliphatic hydrocarbon group may, for example, be an aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; or an alicyclic hydrocarbon group such as a cyclopropyl group, a cyclobutyl group, a cyclopentyl group, a cyclohexyl group or a cyclohexenyl group. The aliphatic hydrocarbon group is preferably an alkyl group, more preferably a C₁₋₃ alkyl group, most preferably a methyl group.

The aromatic hydrocarbon group is not particularly limited, but is preferably has at least 6 and at most 12 carbon atoms, more preferably 6 carbon atoms.

The aromatic hydrocarbon group may, for example, be a phenyl group, a o-tolyl group, a m-tolyl group, a p-tolyl group, a xylyl group, a mesityl group, an o-cumenyl group, a m-cumenyl group, a p-cumenyl group, a biphenylyl group, a benzyl group or a phenethyl group.

Such an aliphatic hydrocarbon group or an aromatic hydrocarbon group may further have a substituent. The substituent may, for example, be the same substituent as in A¹ and B¹.

Further, a pair of X¹ and X², and/or a pair of X³ and X⁴ may be mutually bonded to form a cyclic structure. The cyclic structure is not limited but is preferably a 3-membered ring to a 7-membered ring. Specifically, the cyclic structure may, for example, be a saturated or unsaturated cyclic structure such as a cyclopropane ring, a cyclopentane ring, a cyclohexane ring or a cycloheptane ring.

Further, when the pair of X¹ and X² and/or the pair of X³ and X⁴ form a cyclic structure, the cyclic structure may have a substituent. The substituent is not limited and may, for example, be an aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; an aromatic hydrocarbon group such as a phenyl group, an o-tolyl group, a m-tolyl group, a p-tolyl group or a xylyl group; or an arylalkyl group such as a benzyl group, a phenylethyl group or a phenylpropyl group.

Further, such as aliphatic hydrocarbon group, an aromatic hydrocarbon group or an arylalkyl group may further have another substituent. In such a case, the substituent may, for example, be an anilino group, an amino group, an alkylamino group, a halogen group, a nitro group, an alkoxy group, a cyano group, an alkyl group or a substituent comprising a combination of two or more of the above exemplified substituents.

In the present invention, at least one of X¹, X², X³ and X⁴ is preferably an alkyl group substituted by a heterocyclic ring or an aromatic ring. Specifically, in addition to the above-mentioned benzyl group and phenethyl group, a phenylalkyl group such as a phenylbutyl group or a phenylpropyl group; or an alkyl group having as the substituent an aromatic ring such as an azulene group or a naphthalene group, or a heterocyclic ring such as a pyridine ring, a quinoline ring, a furan ring, a thiophene ring, a piperidine ring, a pyrolidine ring, a pyrrole ring, a thiazole ring, an oxazole ring, an imidazole ring, a thiazoline ring, an oxazoline ring or an imidazoline ring, at the terminal or in the middle of a C₁₋₆ alkyl group such as a methyl group, an ethyl group, a propyl group or a butyl group, may, for example, be mentioned.

The number of carbon atoms in the alkyl group having a heterocyclic ring or an aromatic ring as the substituent is not particularly limited so long as the effects of the present invention are obtained, and it is usually at least 1, and it is usually at most 6, preferably at most 3.

The heterocyclic ring or the aromatic ring as the substituent is not limited, and a suitable substituent is a benzene ring.

Further, the heterocyclic ring or the aromatic ring as the substituent may further have a substituent. Such a substituent may be the same substituent as in A¹ and B¹.

The alkyl group substituted by a heterocyclic ring or an aromatic ring is most preferably a benzyl group. Further, in the present invention, it is preferred that A¹ is a benzene ring and B¹ is a pyridine ring, and one of X¹, X², X³ and X⁴ is an alkyl group substituted by an aromatic ring. Particularly, it is preferred that X¹, X², X³ and X⁴ other than X¹, X², X³ or X⁴ which is the alkyl group substituted by an aromatic ring, and R¹ and R² are C₁₋₃ alkyl groups, and Y¹ is a hydrogen atom. It is more preferred that either one of X¹ and X² is an alkyl group substituted by an aromatic ring.

In the above formula (I), Y¹ is a hydrogen atom or an organic group. Further, Y¹ is preferably a hydrogen atom (not substituted). The organic group as Y¹ is not limited, and may be the same organic group as X¹, X², X³ and X⁴, preferably a C₁₋₆ alkyl group such as a methyl group, an ethyl group, a propyl group or a butyl group, or an aromatic hydrocarbon group such as a phenyl group or a naphthalene group.

In the above formula (I), Z- is an anion. The type of the anion is not limited, and may be either an organic anion or an inorganic anion.

The inorganic anion may, for example, be an inorganic acid ion such as hexafluorophosphate ion, halogen ion, phosphate ion, perchlorate ion, periodate ion, hexafluoroantimonate ion, hexafluorostannate ion or tetrafluoroborate ion.

The organic anion may, for example, be an organic acid ion such as thiocyanate ion, benzenesulfonate ion, benzenedisulfonate ion, naphthalenesulfonate ion, p-toluenesulfonate ion, alkylsulfonate ion, benzenecarboxylate ion, benzenedicarboxylate ion, benzenetricarboxylate ion, alkylcarboxylate ion, trihaloalkylcarboxylate ion, alkylsulfate ion, trihaloalkylsulfate ion or nicotinate ion.

Among them, Z⁻ is preferably a counter ion containing a fluorine atom, such as hexafluorophosphate ion (PH₆⁻), hydrofluoroborate ion, tetrafluoroborate ion (BF₄⁻), trifluoromethanesulfonate anion, nonafluorobutanesulfonate anion, di(trifluoromethylsulfonyl)imide anion, di(2,2,2-trifluoroethylsulfonyl)imide anion, di(3,3,3-trifluoropropylsulfonyl)imide anion, di(4,4,4-trifluorobutylsulfonyl)imide anion, di(perfluoroethylsulfonyl)imide anion, di(perfluoropropylsulfonyl)imide anion or di(perfluorobutylsulfonyl)imide anion.

Further, as Z⁻, a metal complex having a negative charge can suitably be used. As an individual metal complex, for example, an acetylacetonate chelate, azo, salicylaldehyde oxime, diimmonium, dithiol, dipyrromethene, squarylium, thiocatechol chelate, thiobisphenol chelate, bisdithio-α-diketone chelate, bisphenylene dithiol or formazan type transition metal chelate may be mentioned. Among them, in view of light resistance and solubility in a solvent, preferred is an azo metal complex.

Among them, as Z⁻, in view of durability and the solubility in a solvent of the cyanine dye as a whole, more preferred is an anion of an azo metal complex. Particularly preferred is an anion of an azo metal complex having as the central atom a transition element of Group 5 to group 12 of the long-form Periodic Table (hereinafter referred to simply as "the Periodic Table".

The transition element in the anion of the azo metal complex may, for example, be vanadium, niobium, tantalum, chromium, molybdenum, tungsten, manganese, rhenium, iron, ruthenium, osmium, cobalt, rhodium, iridium, nickel, paradium, platinum, copper, silver, gold, zinc, cadonium or mercury. Among them, in view of economical efficiency and the influences over the body, preferred is vanadium, manganese, iron, cobalt or copper.

As an example of a preferred anion of the azo metal complex as Z⁻, an anion of an azo metal complex represented by the following formula (X) may be mentioned. 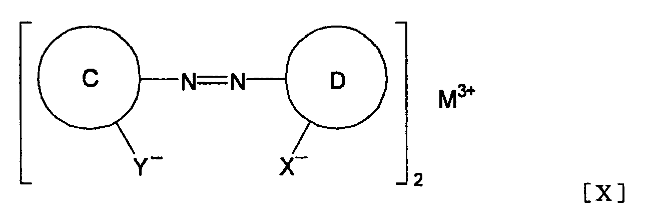 wherein each of the ring C and the ring D which are independent of each other, is an aromatic ring or a heterocyclic ring, provided that at least one of the ring C and the ring D is a heterocyclic ring; each of Y and X which are independent of each other, is a group having active hydrogen; M is a trivalent metal element; and active hydrogens in Y and X leave so that the azo ligand has a charge of -2, and two such azo ligands and one metal atom having a charge of +3 form a metal complex having a charge of -1 as a whole.

In the above formula (X), each of the rings represented by C and D which are independent of each other, is an aromatic ring or an unsaturated or saturated heterocyclic ring, and they may further have a substituent other than Y and X. The type of the ring represented by each of C and D is not particularly limited, and the ring may, for example, be an aromatic ring such as benzene or naphthalene; an unsaturated heterocyclic ring such as pyridine, pyrimidine or thiophene; or a saturated heterocyclic ring such as Meldrum's acid, barbituric acid or pyridone.

In the above formula (X), each of groups represented by Y and X which are independent of each other, is a group having active hydrogen, and is one from which proton leaves so that the group has a negative charge. The group represented by each of Y and X is not particularly limited, and it may, for example, be a carboxylic acid group, a sulfonic group, an amino group, a hydroxyl group, a boronic acid group or a phosphoric group. Further, the above group may be contained in the ring represented by C or D.

In the above formula (X), the element represented by M is a trivalent metal element. Assuming that the groups Y and X of the azo ligand and one of nitrogen atoms in the azo bond coordinate with the metal, a metal complex having two tridentate ligands on one metal element is stabilized as hexadentate. Accordingly, an azo metal complex comprising two -2 ligands and one +3 metal is most stable and can be a pair with the cyanine dye represented by the formula (I) in an equimolar amount.

As preferred examples of the anion of the azo metal complex represented by the above formula (X), ones represented by the following formulae (II) to (V) may be mentioned:

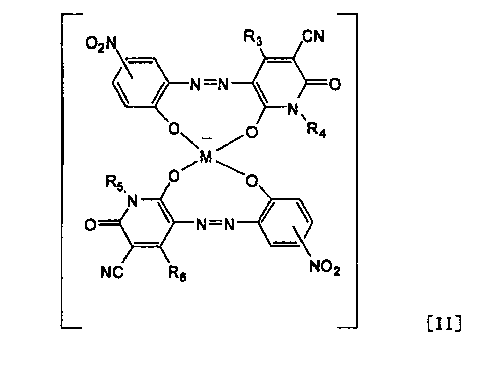

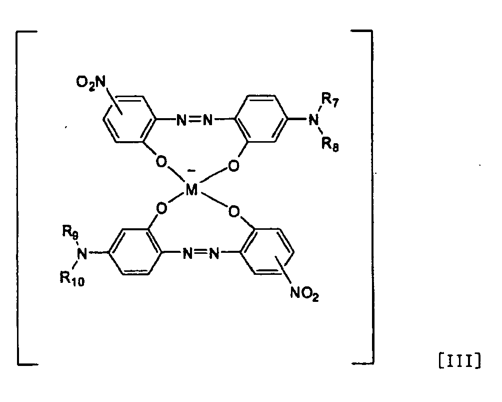

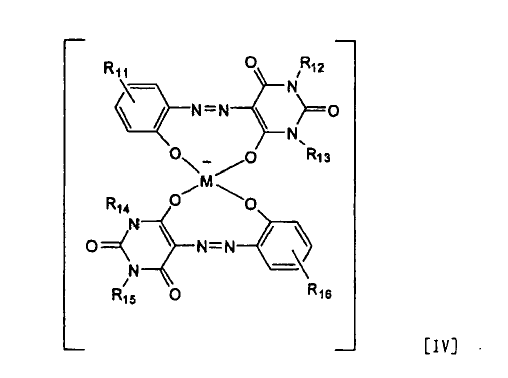

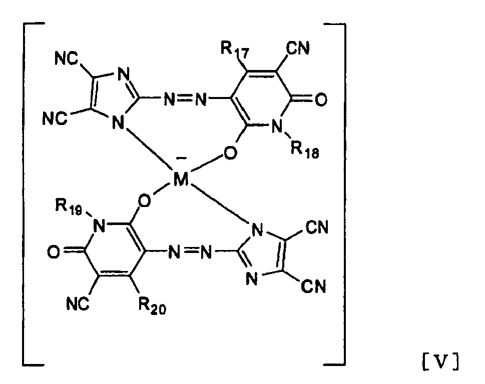

In the formulae (II) to (V), M is a transition element of Group 5 to Group 12 of the Periodic Table as in the formula (X).

In the formulae (II) to (V), each of R⁴, R⁵, R⁷ to R¹⁰, R¹² to R¹⁵, R¹⁸ and R¹⁹ which are independent of one another, is a hydrocarbon group. The hydrocarbon group is not limited, and the hydrocarbon group may be an aliphatic hydrocarbon group or may be an aromatic hydrocarbon group, preferably an aliphatic hydrocarbon group.

The aliphatic hydrocarbon group may, for example, be a C₁₋₆ linear or branched aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; or a C₃₋₆ alicyclic hydrocarbon group such as a cyclopropyl group, a cyclobutyl group, a cyclopentyl group, a cyclohexyl group or a cyclohexenyl group.

In the above hydrocarbon group, at least one hydrogen atom may be substituted, for example, by a halogen group such as a fluoro group, a chloro group or a bromo group.

The solubility of the cyanine dye of the present invention in a solvent usually increases as the number of carbon atoms in R⁴, R⁵, R⁷ to R¹⁰, R¹² to R¹⁵, R¹⁸ and R¹⁹ increases, although it depends on the type of the solvent.

In the formulae (II), (IV) and (V), each of R³, R⁶, R¹¹, R¹⁶, R¹⁷ and R²⁰ which are independent of one another, is a hydrogen atom or a substituent. In a case where such a group is a substituent, the substituent may, for example, be an aliphatic hydrocarbon group such as a methyl group, an ethyl group, a vinyl group, a propyl group, an isopropyl group, an isopropenyl group, a 1-propenyl group, a 2-propenyl group, a 2-propynyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a 2-penten-4-yl group, a hexyl group, an isohexyl group, a 5-methylhexyl group, a heptyl group, an octyl group, a nonyl group, a decyl group or a dodecyl group; an alicyclic hydrocarbon group such as a cyclopropyl group, a cyclobutyl group, a cyclopentyl group, a cyclohexyl group or a cyclohexenyl group; an aromatic hydrocarbon group such as a phenyl group, an o-tolyl group, a m-tolyl group, a p-tolyl group, a xylyl group, a mesityl group, an o-cumenyl group, a m-cumenyl group, a p-cumenyl group or a biphenylyl group; an alkoxy group or an aryloxy group such as a methoxy group, an ethoxy group, a propoxy group, an isopropoxy group, a butoxy group, an isobutoxy group, a sec-butoxy group, a tert-butoxy group, a pentyloxy group or a phenoxy group; an ester group such as a methoxycarbonyl group, an ethoxycarbonyl group, a propoxycarbonyl group, a butoxycarbonyl group, an acetyl group or a benzoyloxy group; a non-substituted or substituted amino group such as an amino group, a methylamino group, a dimethylamino group, an ethylamino group, a diethylamino group, a propylamino group, a dipropylamino group, an isopropylamino group, a diisopropylamino group, a butylamino group, a dibutylamino group, an isobutylamino group, a diisobutylamino group, a sec-butylamino group, a tert-butylamino group, a pentylamino group, a dipentylamino group, an anilino group, an o-toluidino group, a m-toluidino group, a p-toluidino group, a xylidino group or a diphenylamino group; a heterocyclic group such as a quinolyl group, a piperidino group, a pyridyl group or a morpholino group; a halogen group such as a fluoro group, a chloro group, a bromo group or an iodine group; a hydroxyl group; a carboxyl group; a sulfonic acid group; a cyano group; a nitro group; or a substituent comprising a combination of two or more of the above-exemplified substituents.

The positions where the two nitro groups in the formulae (II) and (III) and R¹¹ and R¹⁶ in the formulae (IV) and (V) are bonded to the respective benzene rings may be any of o-, m- and p-positions relative to the azo group. However, the position where the nitro group is bonded is preferably m- position in view of preparation.

As preferred examples of the cyanine dye of the formula (I), for example, compounds represented by the following structural formulae (1) to (46) may be mentioned (in the following description, a compound represented by each structural formula will be referred to simply as "Exemplified Compound (1)" or the like with the number of the structural formula). The following compounds each in a solution state have absorption maximum in a wavelength region longer than 400 nm, usually in violet to blue wavelength region in the vicinity of from 400 to 500 nm, and have a molar absorption coefficient at the absorption maximum wavelength of so high as at least 5×10⁴. Accordingly, they can efficiently absorb visible light in the wavelength region from violet to blue. However, the following compounds are merely examples, and the cyanine dye of the formula (I) which can be used for the optical recording medium of the present invention is not limited thereto:

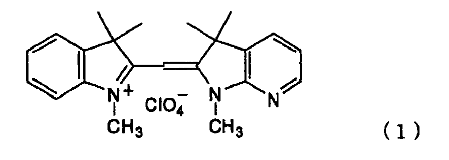

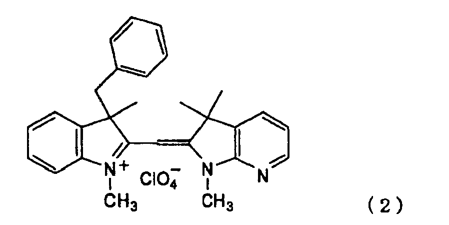

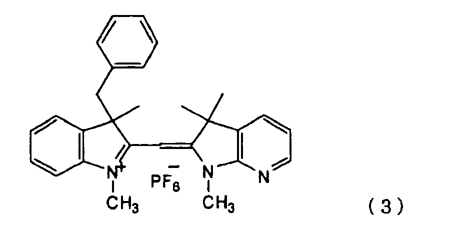

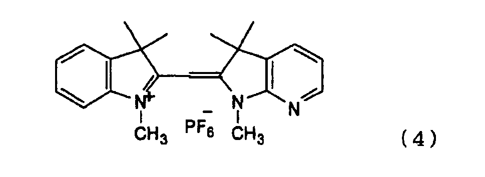

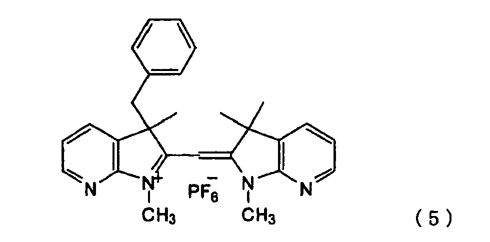

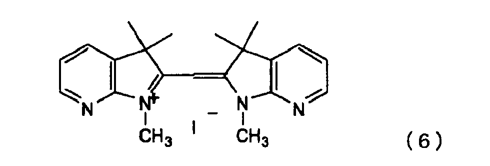

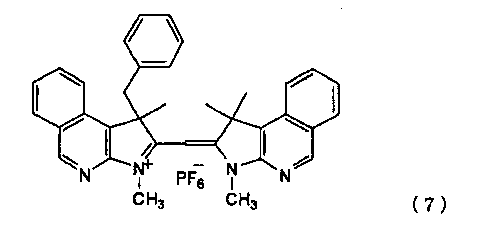

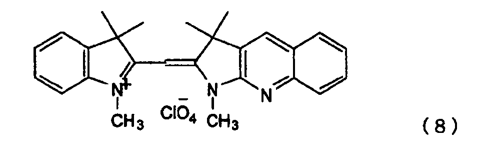

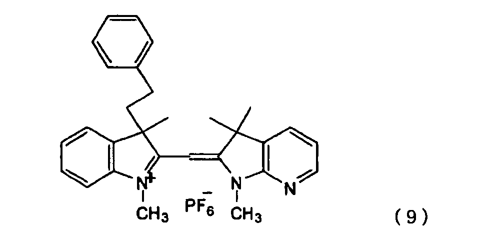

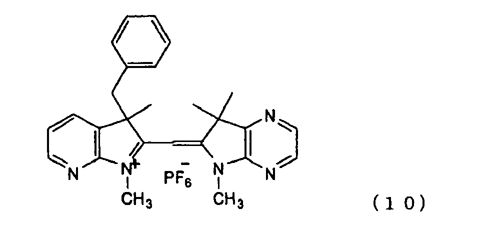

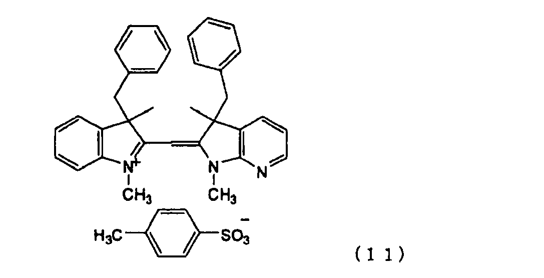

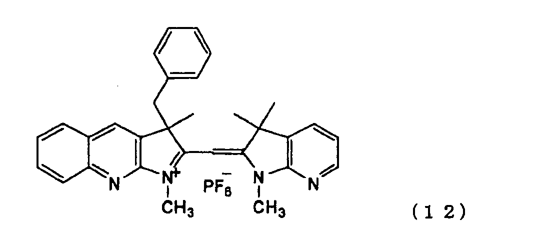

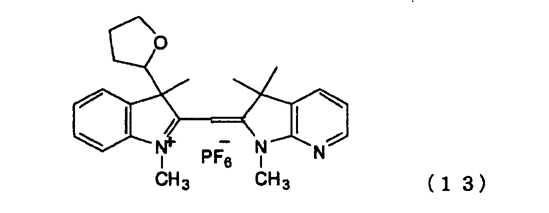

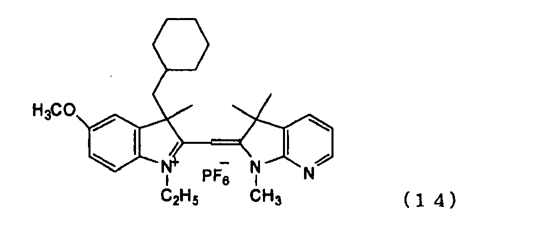

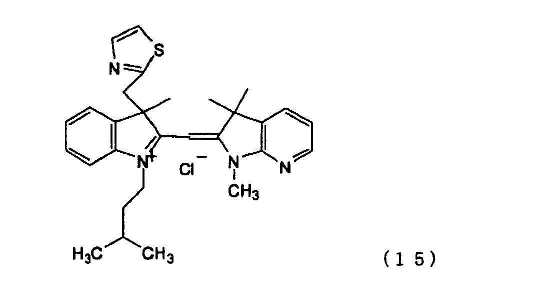

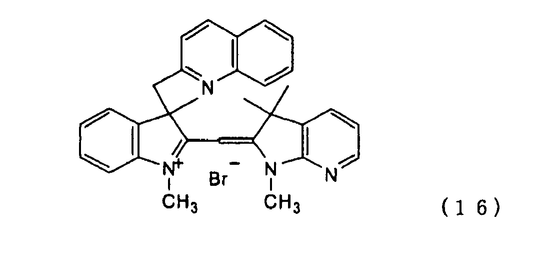

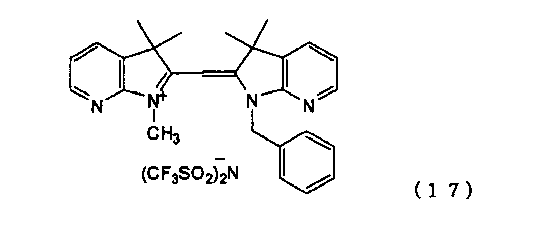

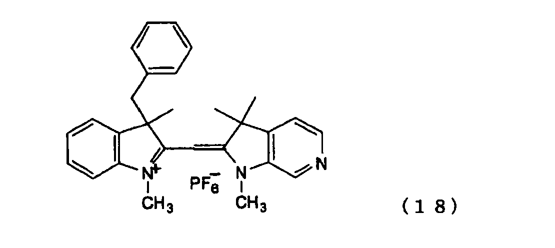

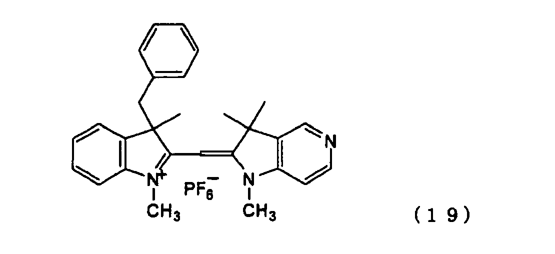

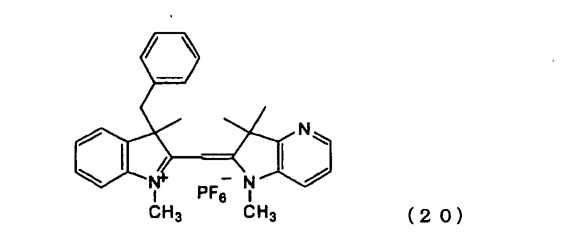

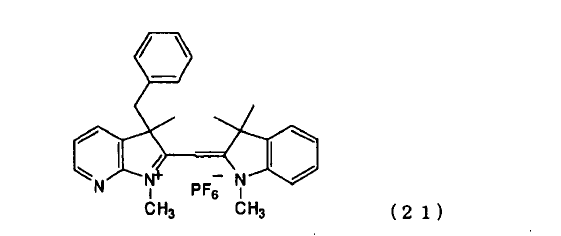

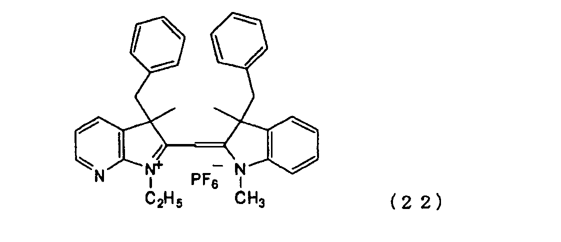

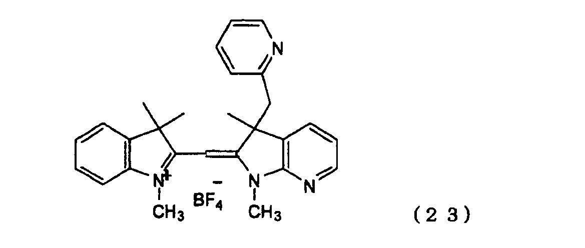

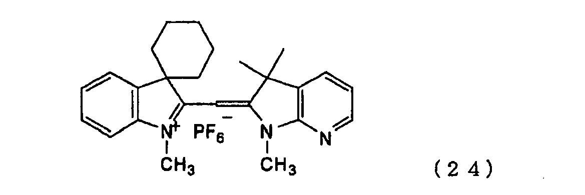

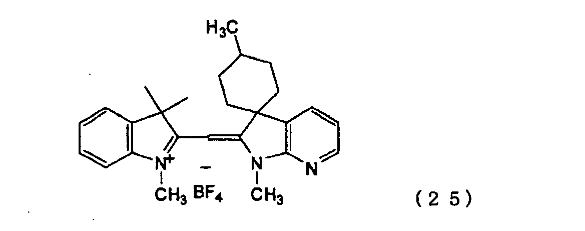

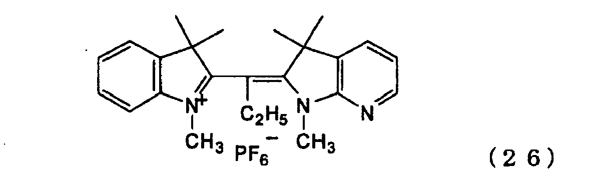

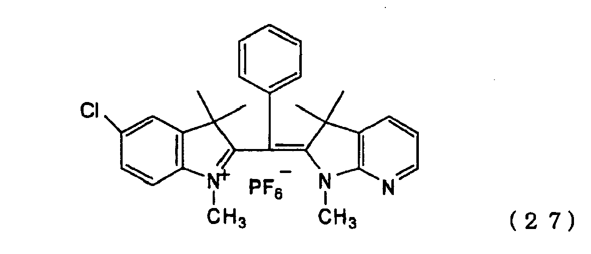

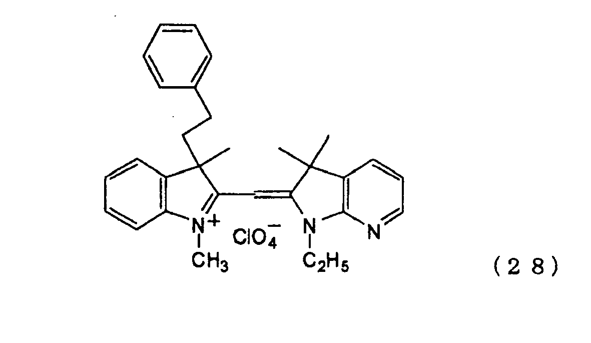

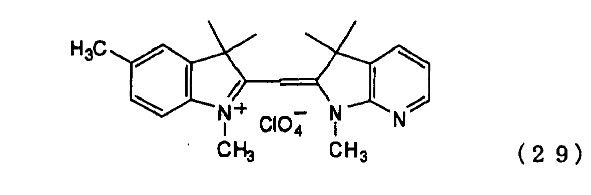

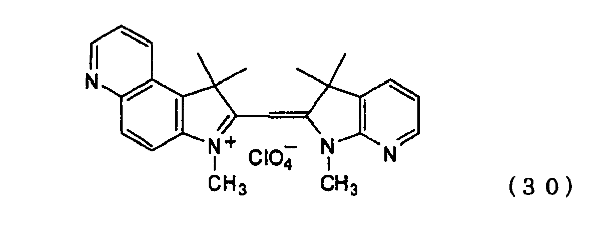

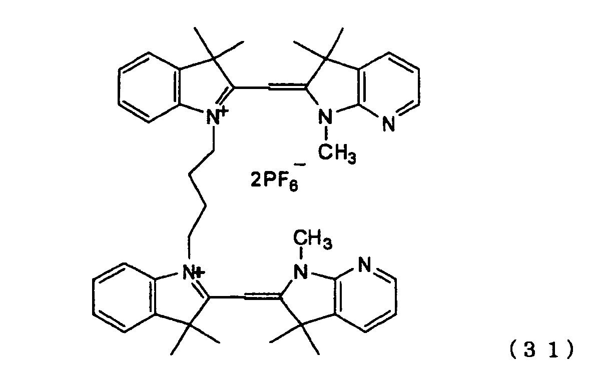

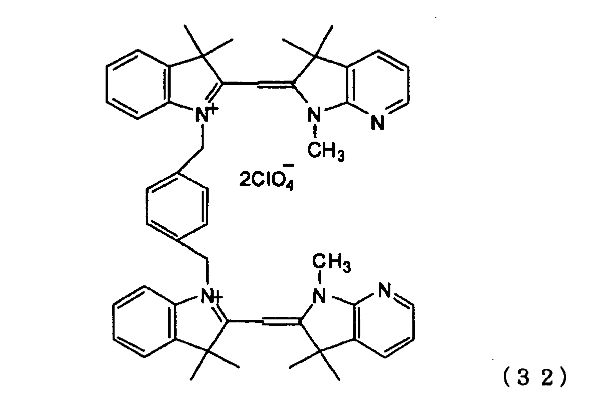

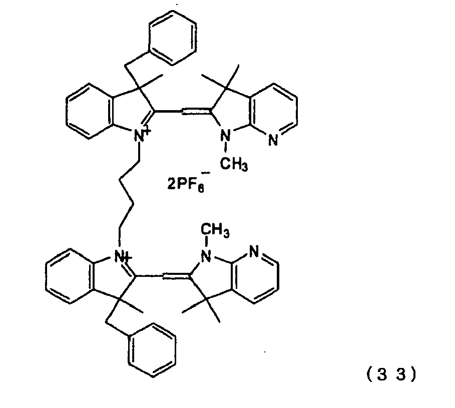

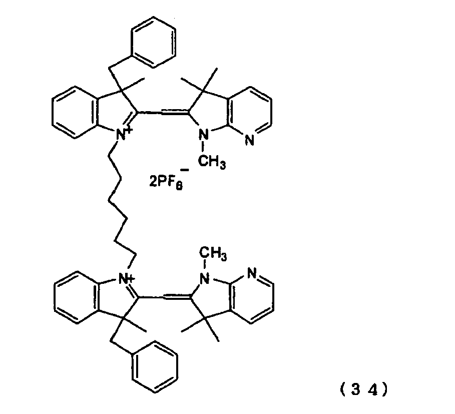

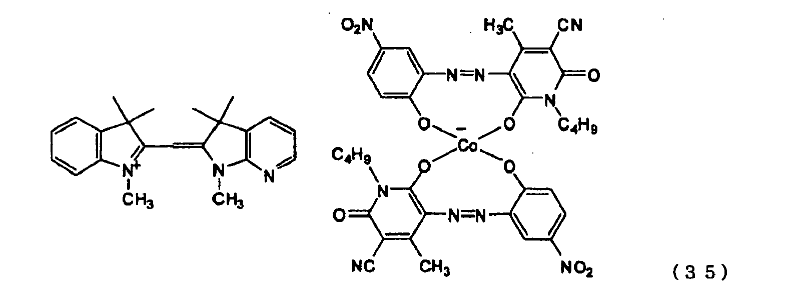

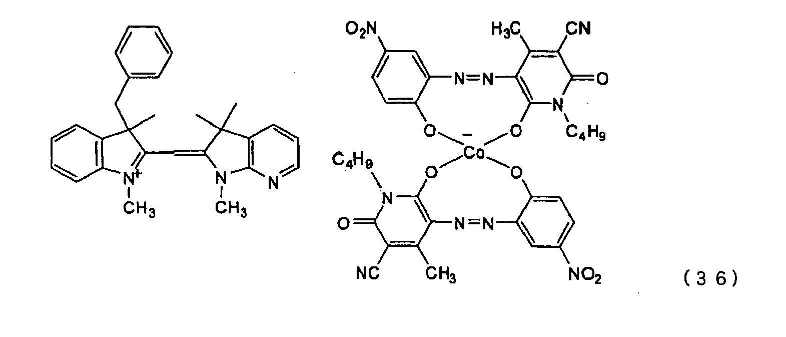

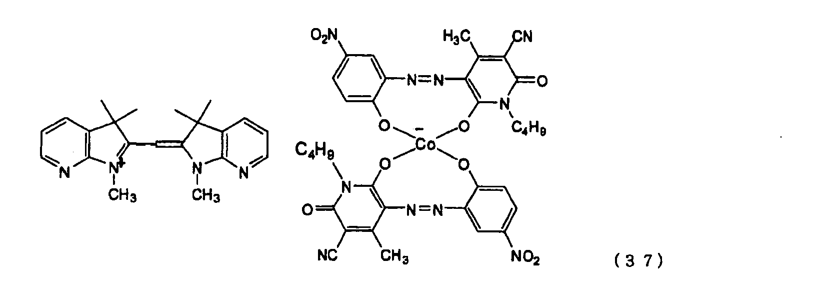

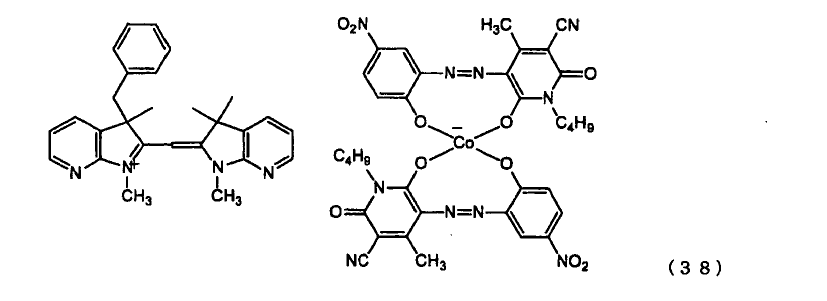

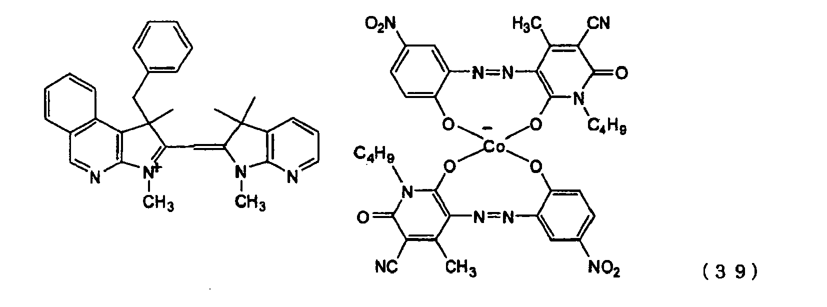

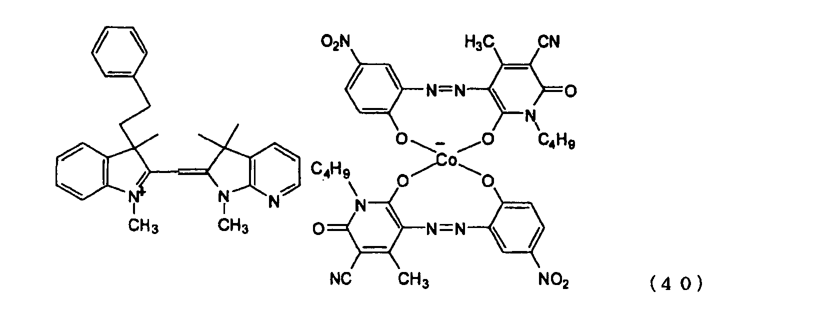

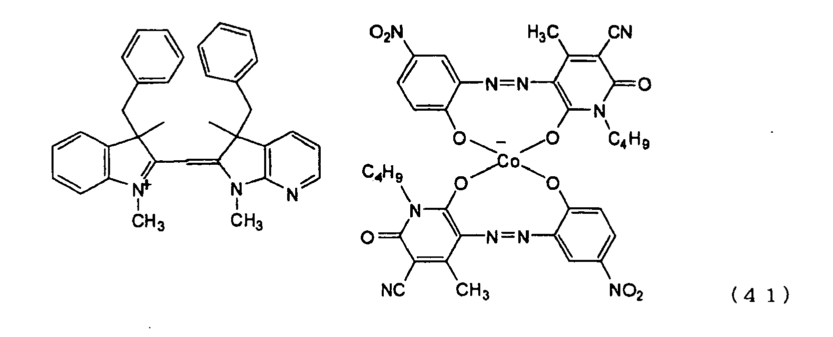

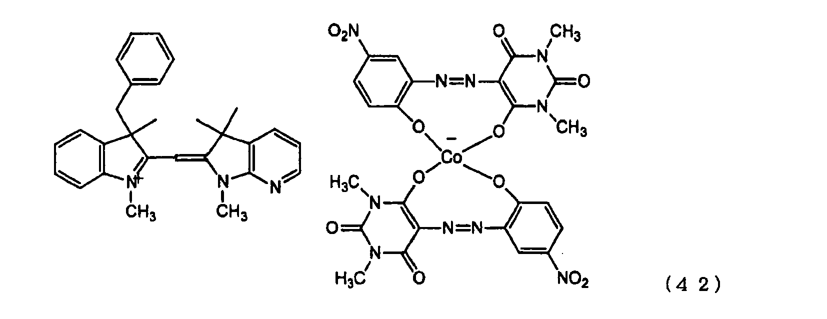

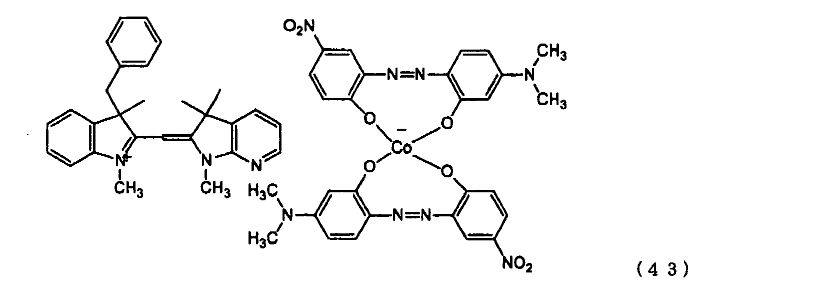

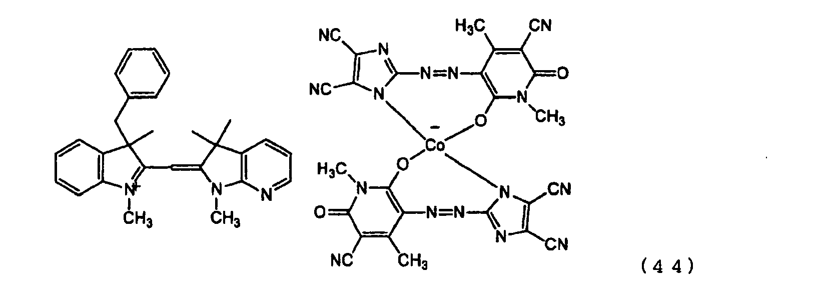

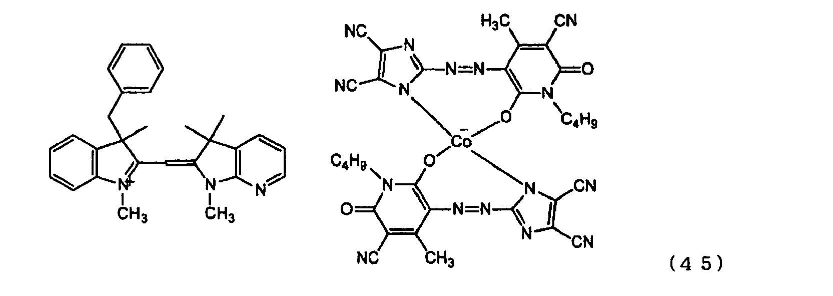

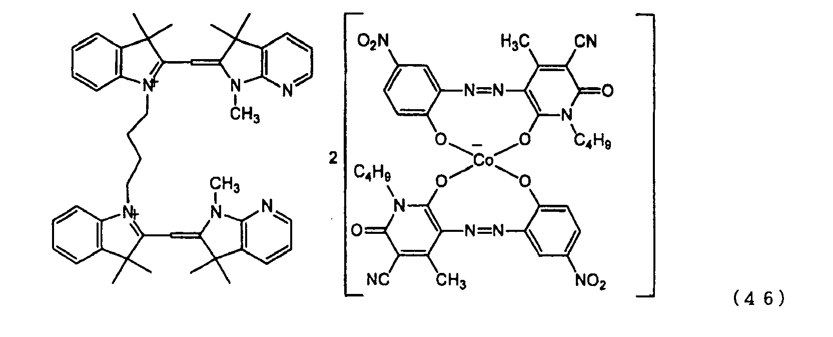

### II. OPTICAL RECORDING MEDIUM

The optical recording medium of the present invention comprises a substrate, and at least a recording layer capable of recording or retrieving of information by irradiation with light, formed on the substrate, wherein the recording layer contains the cyanine dye of the above formula (I). As the case requires, it may have a layer other than the substrate and the recording layer, such as an undercoat layer, a reflective layer or a protective layer.

Now, the optical recording medium of the present invention will be described with reference to the embodiments. However, the following embodiments are merely for description, and the present invention is not limited to the following embodiments, and various changes and modifications are possible without departing from the scope of the present invention.

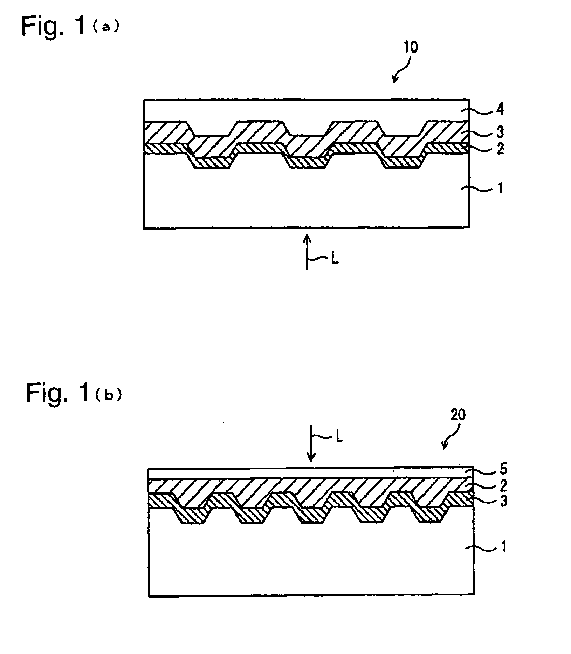

Now, a first embodiment of the present invention will be described. Fig. 1 (a) is a partial cross-section schematically illustrating one example of a layer structure of an optical recording medium according to the first embodiment of the present invention. An optical recording medium 10 shown in Fig. 1(a) has a structure such that a substrate 1 made of a light transmitting material, a recording layer 2 formed on the substrate 1, and a reflective layer 3 and a protective layer 4 laminated on the recording layer 2 are laminated in this order. On the optical recording medium 10, recording/retrieving of information is carried out by a laser beam L applied from the substrate 1 side.

For the convenience of the description, in the optical recording medium 10, the side where the protective layer 4 is present is regarded as the upper direction, and the side where the substrate 1 is present is regarded as the lower direction, and the respective surfaces of each layer corresponding to these directions are regarded as the upper and lower surfaces of each layer, respectively.

As the material of the substrate 1, various materials may basically be used so long as they are transparent materials at the wavelengths of the recording light and the retrieving light. Specifically, a resin such as an acrylic resin, a methacrylic resin, a polycarbonate resin, a polyolefin resin (particularly non-crystalline polyolefin), a polyester resin, a polystyrene resin or an epoxy resin; or glass may, for example, be mentioned. Further, a substrate having such a structure that a resin layer made of a radiation-curable resin such as a photocurable resin is formed on glass, may be used. Among them, from the viewpoint of high productivity, costs, moisture absorption resistance, etc., a substrate made of an injection-molded polycarbonate is preferred. From the viewpoint of chemical resistance, moisture absorption resistance, etc., a substrate made of a non-crystalline polyolefin is preferred. Further, from the viewpoint of the high speed response, etc., a substrate made of glass is preferred.

In a case where a substrate 1 made of a resin is used or where a substrate 1 having a resin layer formed on the side (the upper side) which is in contact with the recording layer, is used, guide grooves or pits for a recording or retrieving light, may be formed on the upper side. The shape of the guide grooves may, for example, be a concentric circular shape or spiral shape, based on the center of the optical recording medium 10. In the case of forming spiral guide grooves, the groove pitch is preferably at a level of from 0.2 to 1.2 µm.

The recording layer 2 is a layer to be formed directly on the upper side of the substrate 1 or formed on the upper side of an undercoat layer or the like formed on the substrate 1 as the case requires, and contains the cyanine dye of the above formula (I). The cyanine dye of the formula (I) may be used alone or two or more may be used in optional combination in an optional ratio.

Further, to the recording layer 2, in addition to the cyanine dye of the formula (I), another type of a dye may be used in combination, as the case requires. Such another type of a dye is not particularly limited so long as it is one which mainly has a proper absorption in an oscillation wavelength region of the recording laser beam. Further, it is possible to produce an optical recording medium 10 which is capable of recording/retrieving by means of a plurality of laser beams belonging to different wavelength zones, by incorporating a dye suitable for recording/retrieving by means of a near infrared laser beam having an oscillation wavelength in a wavelength zone of from 770 to 830 nm, which is used for e.g. CD-R, or a dye suitable for recording/retrieving by means of a red laser beam having an oscillation wavelength in a wavelength zone of from 620 to 690 nm, which is used for e.g. DVD-R, in the recording layer 2 in combination with the cyanine dye of the formula (I). Further, it is possible to further improve light resistance by selecting one having favorable light resistance among the above dyes for CD-R and DVD-R and using it in combination with the cyanine dye of the formula (I).

Such another type of a dye other than the cyanine dye of the formula (I), may, for example, be a metal-containing azo dye, a benzophenone dye, a phthalocyanine dye, a naphthalocyanine dye, a cyanine dye, an azo dye, a squarylium dye, a metal-containing indoaniline dye, a triarylmethane dye, a merocyanine dye, an azulenium dye, a naphthoquinone dye, an anthraquinone dye, an indophenol dye, a xanthene dye, an oxazine dye or a pyrylium dye.

Further, to the recording layer 2, in addition to the cyanine dye of the formula (I), a transition metal chelate compound (such as acetyl acetonate chelate, bisphenyl dithiol, salicylaldehyde oxime or bisdithio-α-diketone) or the like may be incorporated as a singlet oxygen quencher in order to improve the stability or light resistance, or a recording sensitivity-improving agent such as a metal compound may be incorporated in order to improve the recording sensitivity. Here, the metal compound is meant for one wherein a metal such as a transition metal is contained in a compound in the form of an atom, an ion or a cluster, and it may, for example, be an organic metal compound such as an ethylenediamine complex, an azomethine complex, a phenylhydroxyamine complex, a phenanthroline complex, a dihydroxyazobenzene complex, a dioxime complex, a nitrosoaminophenol complex, a pyridyltriazine complex, an acetylacetonate complex, a metallocene complex or a porphyrin complex. The metal atom is not particularly limited, but it is preferably a transition metal.

Further, it is also possible to use a binder, a leveling agent, a defoaming agent, etc., as the case requires. As a preferred binder, a polyvinyl alcohol, a polyvinyl pyrrolidone, a nitrocellulose, cellulose acetate, a ketone resin, an acrylic resin, a polystyrene resin, a urethane resin, a polyvinyl butyral, a polycarbonate or a polyolefin may, for example, be mentioned.

As the film forming method for the recording layer 2, various thin film forming methods which are commonly employed may be mentioned, such as, a vacuum vapor deposition method, a sputtering method, a doctor blade method, a casting method, a spin coating method and a dipping method. From the viewpoint of the mass production and costs, a spin coating method is preferred, and from such a viewpoint that a recording layer 2 having a uniform thickness is obtainable, a vacuum vapor deposition method or the like is preferred to the coating method. In the case of film forming by means of a spin coating method, the rotational speed is preferably from 500 to 15,000 rpm. Further, in some cases, after the spin coating, treatment such as heating or applying a solvent vapor, may be carried out.

In a case where the recording layer 2 is formed by a coating method such as a doctor blade method, a casting method, a spin coating method or a dipping method, the solvent for coating in which the cyanine dye of the formula (I) is dissolved to be applied to the substrate 1, is not particularly limited so long as it is a solvent which does not erode the substrate 1. Specifically, it may, for example, be a ketone alcohol solvent such as diacetone alcohol or 3-hydroxy-3-methyl-2-butanone; a cellosolve solvent such as methyl cellosolve or ethyl cellosolve; a linear hydrocarbon solvent such as n-hexane or n-octane; a cyclic hydrocarbon solvent such as cyclohexane, methylcyclohexane, ethylcyclohexane, dimethylcyclohexane, n-butylcyclohexane, tert-butylcyclohexane or cyclooctane; a fluoroalkyl alcohol solvent such as tetrafluoropropanol, octafluoropentanol or hexafluorobutanol; or a hydroxycarboxylate solvent such as methyl lactate, ethyl lactate or methyl 2-hydroxyisobutyrate. In a case of forming the recording layer 2 by a coating method, the concentration of the cyanine dye of the formula (I) when it is dissolved and applied to the substrate 1 is preferably from 0.3 to 2.0 wt%, more preferably from 0.5 to 1.5 wt% based on the solvent.

In a case where the vacuum vapor deposition is employed, for example, the cyanine dye of the formula (I) and, as the case requires, other components for the recording layer, such as dyes or various additives, may be put into a crucible set in a vacuum chamber, then this vacuum chamber is evacuated by a suitable vacuum pump to a level of from 10⁻² to 10⁻⁵ Pa, whereupon the crucible is heated to vaporize the components for the recording layer and to have them vapor-deposited on a substrate disposed to face the crucible, thereby to form the recording layer 2.

The thickness of the recording layer 2 is not particularly limited, since the suitable thickness may vary depending upon the recording method, etc. However, in order to make recording possible, a thickness of a certain degree is required, and it is usually at least 1 nm, preferably at least 5 nm. However, if it is too thick, recording can not be properly carried out in some cases, and it is usually at most 300 nm, preferably at most 200 nm, more preferably at most 100 nm.

The reflective layer 3 is formed on the recording layer 2. The thickness of the reflective layer 3 is preferably from 50 to 300 nm. As the material for the reflective layer 3, a material having a sufficiently high reflectance at the wavelength of the retrieving light, for example, a metal such as Au, Al, Ag, Cu, Ti, Cr, Ni, Pt, Ta or Pd, may be used alone or in the form of an alloy. Among them, Au, Al or Ag is suitable as a material for the reflective layer 3, as the reflectance is high. Further, using such a metal as the main component, other materials may be incorporated. Here, the "main component' means one having a content of at least 50 wt%. Materials other than the main component may, for example, be a metal and a semi metal, such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd and Nd. Among them, one containing Ag as the main component is particularly preferred from such a viewpoint that the cost is low, a high reflectance can easily be obtained, and when the after-mentioned print-receiving layer is provided, one having a white and beautiful ground color, is obtainable. For example, an alloy having from about 0.1 to 5 atomic% of at least one member selected from the group consisting of Au, Pd, Pt, Cu and Nd incorporated to Ag, is preferred from the viewpoint of the high reflectance, high durability, high sensitivity and low cost. Specifically, it may, for example, be a AgPdCu alloy, a AgCuAu alloy, a AgCuAuNd alloy or a AgCuNd alloy. As a material other than a metal, it is also possible to alternately laminating a low refractive index thin film and a high refractive index thin film to form a multilayered film, which will be used as the reflective layer 3.

As a method for forming the reflective layer 3, a sputtering method, an ion plating method, a chemical vapor deposition method or a vacuum vapor deposition method may, for example, be mentioned. Further, it is also possible to form a known inorganic or organic interlayer or adhesive layer on the substrate 1 or under the reflective layer 3, in order to improve the reflectance, improve the recording characteristics or improve the adhesive property.

The protective layer 4 is formed on the reflective layer 3. The material for the protective layer 4 is not particularly limited so long as it is one to protect the reflective layer 3 from an external force. As a material of an organic substance, a thermoplastic resin, a thermosetting resin, an electron beam-curable resin, an ultraviolet (hereinafter sometimes referred to as UV) curable resin may, for example, be mentioned. Further, as an inorganic substance, silicon oxide, silicon nitride, magnesium fluoride (MgF₂) or tin oxide (SnO₂) may, for example, be mentioned.

In a case where a thermoplastic resin or a thermosetting resin is, for example, used, the protective layer 4 may be formed by dissolving it in a suitable solvent to form a coating liquid, which is applied and dried on the reflective layer 3. In a case where an UV curable resin is used, it may be applied on the reflective layer as it is, or a coating liquid prepared by dissolving it in a suitable solvent, may be applied on the reflective layer 3, followed by curing by irradiation with UV light, to form the protective layer 4. As such an UV curable resin, an acrylate resin such as urethane acrylate, epoxy acrylate or polyester acrylate, may, for example, be used. These materials may be used alone or in combination as a mixture of a plurality of them. Further, the protective layer may be formed in the form of a single layer or multilayers.

As the method for forming the protective layer 4, a coating method such as a spin coating method or a casting method, or a method such as a sputtering method or a chemical vapor deposition method, may be employed in the same manner as for the recording layer 2. Among them, a spin coating method is preferred. The thickness of the protective layer 4 is usually at least 0.1 µm, preferably at least 3 µm, since a certain thickness is required to provide the protecting function. However, if it is too thick, not only no further effects will be obtained, but also it takes time to form the protective layer 4, or the cost tends to increase. Accordingly, it is usually at most 100 µm, preferably at most 30 µm.

In the foregoing, the layered structure of the optical recording medium 10 has been described with reference to the structure in which a substrate, a recording layer, a reflective layer and a protective layer are laminated in this order, as an example. However, other layer structures may be adopted.

For example, on the upper surface of the protective layer 4 in the layered structure of the above example, or on the upper surface of the reflective layer 3 by omitting the protective layer 4 from the layered structure in the above example, another substrate 1 may further be bonded. The substrate 1 in such a case may be a substrate itself having no layer formed thereon, or one having an optional layer such as a reflective layer 3 on the bonding surface or the opposite surface. Further, two sheets of the optical recording media 10 having the layered structure of the above example or the optical recording media 10 having the protective layer 4 omitted from the layered structure of the above example, may be bonded to each other so that the upper surfaces of the respective protective layers 4 and/or reflective layers 3 face to each other.

Now, a second embodiment of the present invention will be described. Fig. 1 (b) is a partial cross-section schematically illustrating one example of a layer structure of an optical recording medium according to a second embodiment of the present invention. In Fig. 1(b), the same elements as in Fig. 1 (a) are marked with the same symbols, and their description is omitted. An optical recording medium 20 shown in Fig. 1(b) has a structure such that a substrate 1 made of a light transmitting material, a reflective layer 3 formed on the substrate 1, and a recording layer 2 and a protective coating film 5 laminated on the reflective layer 3 are laminated in this order. On the optical recording medium 20, recording/retrieving of information is carried out by laser beam L applied from the protective coating film 5 side.

The protective coating film 5 may be formed by bonding a film or sheet material by an adhesive, or by using the same material as for the above-mentioned protective layer 4 and applying a film-forming coating liquid, followed by curing or drying. The thickness of the protective coating film 5 is usually at least 0.1 µm, preferably at least 3 µm, since a thickness of certain degree is required in order to perform the protecting function. However, if it is too thick, not only no additional effects can be obtained, but also it tends to take time to form the protective coating film 5, or costs tend to be high. Accordingly, it is usually at most 300 µm, preferably at most 200 µm.

The respective layers such as the recording layer 2 and the reflective layer 3 may be the same as in the optical recording medium 10 according to the first embodiment. However, in the second embodiment, the substrate 1 is not required to be transparent. Accordingly, in addition to the above-mentioned materials, a substrate made of an opaque resin, ceramics or metal (inclusive of an alloy) may be used. Also in such a layered structure, between the above-mentioned respective layers, an optional layer may be formed as the case requires, so long as the characteristics of the present invention will not be thereby impaired.

As one of means to increase the recording density of the optical recording medium 10 or 20, the numerical aperture of an object lens may be increased. It is thereby possible to reduce the optical spot focused on the information recording surface. However, if the numerical aperture of an object lens is increased, aberration of the optical spot caused by warpage or the like of the optical recording medium 10 or 20 tends to be large when irradiated with a laser beam to carry out recording/retrieving, and there may be a case where good recording or retrieving signals can not be constantly obtained.

Such aberration tends to be large as the thickness of the protective coating film or the transparent substrate for a laser beam to pass through, is thick. Accordingly, in order to reduce aberration, it is preferred to reduce the thickness of the protective coating film or the substrate as far as possible. However, usually, in order to secure the strength of the optical recording medium 10 or 20, the substrate 1 is required to have a thickness of a certain degree. Accordingly, in such a case, it is preferred to employ the structure of the optical recording medium 20 according to the second embodiment (the optical recording medium 20 having a basic layered structure comprising a substrate 1, a reflective layer 3, a recording layer 2 and a thin protective coating film 5). As compared with reducing the thickness of the substrate 1 in the optical recording medium 10 according to the first embodiment, it is easy to reduce the thickness of the protective coating film 5 of the optical recording medium 20 according to the second embodiment, and it is preferred to employ the optical recording medium 20 according to the second embodiment.

However, even with the structure of the optical recording medium 10 according to the first embodiment (the optical recording medium 10 having a basic layered structure comprising a substrate 1, a recording layer 2, a reflective layer 3 and a protective layer 4), it becomes possible to use it by reducing the aberration by reducing the thickness of the transparent substrate 1 through which the recording or retrieving laser beam will pass, to a level of from 50 to 300 µm.

Further, after forming other respective layers, an ultraviolet curable resin layer or an inorganic thin film may, for example, be formed on the incidence surface for the recording or retrieving laser beam (usually on the lower surface of the substrate 1) for the purpose of protecting the surface or preventing deposition of dust, etc. On the surface opposite to the incident surface for the recording or retrieving laser beam (usually the upper surface of the protective layer 3 or the reflective layer 4), a print receptive layer may be formed, on which printing by various printers such as ink jet printers or thermal transfer printers, or writing by means of various pens or pencils, is possible.

With respect to the laser beam to be used for recording or retrieving information in the optical recording medium 10 or 20 to which each embodiment of the present invention is applied, the shorter the wavelength, the better from the viewpoint of realizing high density recording. Particularly preferred is a laser beam having a wavelength of from 350 to 530 nm. As a typical example of such a laser beam, a laser beam having a central wavelength of 405 nm, 410 nm or 515 nm may be mentioned.

The laser beam having a wavelength of from 350 to 530 nm may be obtained by using a high power semiconductor laser beam of a blue color having a wavelength of 405 nm or 410 nm or a bluish green color having a wavelength of 515 nm. Otherwise, it may also be obtained by subjecting either oscillating laser beam of (a) a continuously oscillating semiconductor laser beam having a basic oscillation wavelength of from 740 to 960 nm or (b) a continuously oscillating solid laser beam having a basic oscillation wavelength of from 740 to 960 nm which can be excited by a semiconductor laser beam, to wavelength change by a second harmonic generation (SHG) element.

Such a SHG element may be any one so long as it is a piezoelectric element lacking in inversion symmetry, but KDP (KH₂PO₄), ADP (NH₄H₂PO₄), BNN (Ba₂NaNb₅O₁₅), KN (KNbO₃), LBO(LiB₃O₅) or a compound semiconductor may, for example, be preferred. A specific example for the second harmonic wave may be, in the case of a semiconductor laser beam having a basic oscillation wavelength of 860 nm, 430 nm as a double wave of the basic oscillation wavelength, or, in the case of a solid laser beam excited by a semiconductor laser beam, a double wave of 430 nm from a Cr-doped LiSrAIF₆ crystal (the basic oscillation wavelength: 860 nm).

When information is to be recorded on the optical recording medium 10 or 20 according to each embodiment of the present invention, usually, a laser beam focused to a level of from 0.4 to 0.6 µm will be irradiated to the recording layer 2 (usually from the direction of the laser beam L to the recording layer 2 in Figs. 1 (a) and 1 (b)). The portion of the recording layer 2 irradiated with the laser beam, will absorb the energy of the laser beam and will thereby undergo thermal change such as decomposition, heat generation or melting, whereby the optical characteristics will be changed.

When retrieving of information recorded in the recording layer 2 is to be carried out, a laser beam having a lower energy is irradiated similarly to the recording layer 2 (usually the laser beam L is irradiated from the same direction as in the case of recording). Retrieving of the information is carried out by reading out the difference between the reflectance at a portion where a change of the optical characteristics has occurred in the recording layer 2 (i.e. a portion where the information has been recorded) and the reflectance at a portion where no change has occurred.

Now, as a third embodiment of the present invention, an optical recording medium having a plurality of recording layers and a process for producing it will be described.

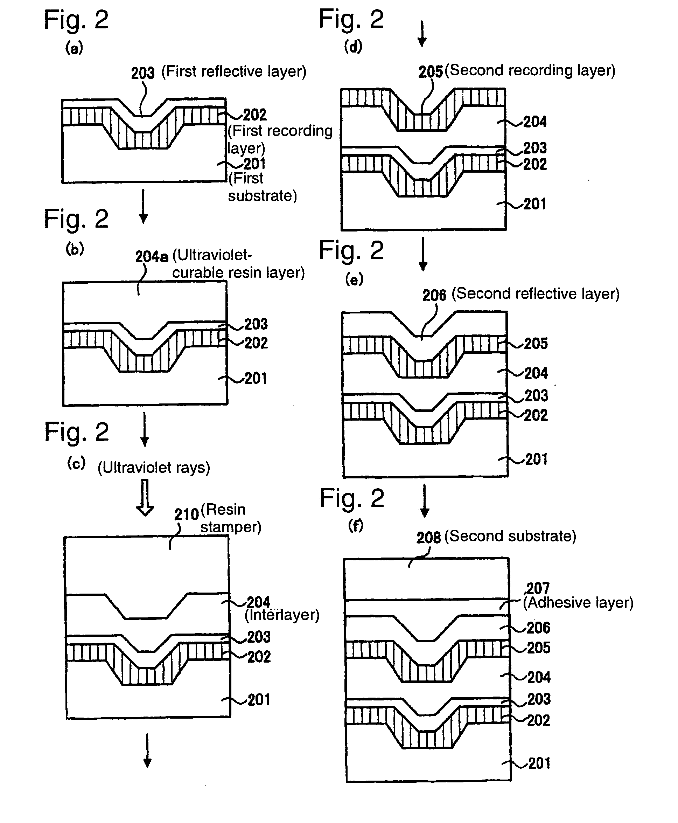

Figs. 2(a) to 2(f) are views illustrating a process for producing a double-layer optical recording medium according to a third embodiment of the present invention. First, as shown in Fig. 2(a), a first substrate 201 having grooves, lands and prepits formed on its surface is prepared by e.g. an injection molding method using a stamper. Then, a coating liquid having at least organic dye dissolved in a solvent is applied to the surface on a side having irregularities of the first substrate 201 e.g. by spin coating and heated (annealed) to remove the solvent used for the coating liquid thereby to form a first recording layer 202. After the first recording layer 202 is formed, an Ag alloy or the like is sputtered or vapor-deposited to form a translucent first reflective layer 203 on the first recording layer 202.

Then, as shown in Fig. 2(b), an ultraviolet-curable resin layer 204a is formed by coating e.g. by spin coating on the entire surface of the first reflective layer 203. Further, as shown in Fig. 2(c), after the ultraviolet-curable resin layer 204a is formed e.g. by spin coating, a resin stamper 210 is placed to transfer irregularities to the ultraviolet-curable resin layer 204a, while the thickness of the ultraviolet-curable resin layer 204a is adjusted to be within a determined range. In such a case, the ultraviolet-curable resin layer 204a is cured e.g. by applying ultraviolet rays from the resin stamper 210 side, and after it is sufficiently cured, the resin stamper 210 is peeled off form an interlayer 204 having irregularities on its surface.

The resin stamper 210 is not limited so long as it has sufficient releasability from the resin to be the interlayer 204, and it preferably has favorable moldability and favorable shape stability. In view of the productivity and the cost, the resin stamper 210 is used for transfer preferably several times. Further, it is preferably recyclable after use. The material of the resin stamper 210 may, for example, be an acrylic resin, a methacrylic resin, a polycarbonate resin, a polyolefin resin (particularly non-crystalline polyolefin), a polyester resin, a polystyrene resin or an epoxy resin. Among them, in view of high productivity such as moldability, the cost, low moisture absorption, shape stability, etc., preferred is a non-crystalline polyolefin.

Then, as shown in Fig. 2(d), a coating liquid having an organic dye dissolved in a solvent is applied to the surface of the interlayer 204 e.g. by spin coating and heated (annealed) to remove the solvent used for the coating liquid thereby to form a second recording layer 205.

Then, as shown in Fig. 2(e), an Ag alloy or the like is sputtered or vapor-deposited to form a second reflective layer 206 on the second recording layer 205.

Then, as shown in Fig. 2(f), a mirror substrate as a second substrate 208 obtained by injection molding of polycarbonate is bonded to the second reflective layer 206 by means of an adhesive layer 207 to complete production of an optical recording medium.

In the foregoing, the optical recording medium and its production process according to the third embodiment of the present invention has been described. However, the present embodiment is not limited to the above description, and various changes and modification are possible. For example, the optical recording medium may have three or more recording layers. Further, as the case requires, another layer may be formed between the respective layers or as an outermost layer. The optical recording medium is not limited to a substrate incidence optical disk, and it may be a film face incidence optical disk having a laminated structure comprising at least a substrate/a reflective layer/a second recording layer/a buffer layer/an interlayer/a translucent reflective film/a first recording layer/a protective layer, on which recording/retrieving of information is carried out by applying a laser beam from the protective layer side (i.e. the film face side).

A preferred dye to be used for a multilayer medium is required to have a better recording sensitivity than the dye used for a monolayer medium, because when information is recorded on the respective layers, absorption and passage of light in layers not for recording are inevitable.

For example, in the case of a double layer optical recording medium shown in Fig. 2, since the first recording layer 203 is a translucent reflective film, not all energy of the laser beam applied at the time of recording is not reflected on the first reflective layer 203. Accordingly, the energy of the laser beam applied to the first recording layer 202 is lower than that applied to the recording layer 2 in the monolayer medium shown in Fig. 1. Accordingly, the dye constituting the first recording layer 202 in the double layer optical recording medium shown in Fig. 2 is required to have much higher recording sensitivity than the dye constituting the recording layer 2 in the monolayer medium shown in Fig. 1.

In this point also, the cyanine dye of the present invention, which has favorable recording sensitivity as compared with a conventional one, is considered to be better:

### EXAMPLES

The cyanine dye of this invention can be prepared by various methods, and when emphasis is placed on economical efficiency, a method of utilizing nucleophilic substitution of an active methine group and a proper leaving group is suitable. Now, the present invention will be described in further detail with reference to Examples, but it should be understood that the present invention is by no means restricted thereto.

### I: PREPARATION AND EVALUATION OF DYE

### EXAMPLE 1

### Preparation 1 of Dye

3.7 g of a heterocyclic ring derivative represented by the following formula (47) and 5.8 g of a nitroso derivative represented by the following formula (48) were heated (90°C) with stirring in acetic anhydride (26 ml) for one hour. After the reaction, water was dropwise added and cooled. The precipitated crystals were collected by filtration to obtain 2.6 g of the above exemplified compound (1).

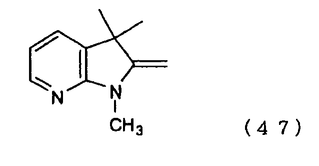

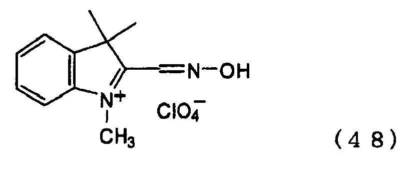

Some of the crystals were sampled, and their melting point and the decomposition point as heat characteristics were measured by analysis by a differential scanning calorimeter (DSC), whereupon the exemplified compound (1) had a decomposition point hardly distinguishable from the melting point in the vicinity of 255°C.

As light absorption characteristics, an absorption spectrum in a methanol solution was measured by a conventional method, whereupon the exemplified compound (1) showed absorption maximum (λₘₐₓ) at a wavelength of 424.5 nm (ε=3.74×10⁵).

A ¹H-nuclear magnetic resonance spectrum of the exemplified compound (1) in a dimethyl sulfoxide-d₆ solution was measured, whereupon peaks at chemical shifts δ(ppm,TMS) of showed peaks at 1.60(6H,s), 1.62(6H,s), 3.18(3H,s), 3.43(3H,s), 5.87(1 H,s)7.32(1 H,dd), 7.44(1 H,t), 7.54(1 H,t), 7.62(1 H,d), 7.71 (1 H,d), 8.03(1 H,d) and 8.38(1 H,d) were shown.

### EXAMPLE 2

### Preparation 2 of Dye

70 g of a heterocyclic ring derivative represented by the above formula (47) and 138 g of a nitroso derivative represented by the above formula (49) were heated (90°C) with stirring in acetic anhydride (490 ml) for one hour. After the reaction, water was dropwise added and cooled. The precipitated crystals were collected by filtration to obtain 67 g of the above exemplified compound (2).

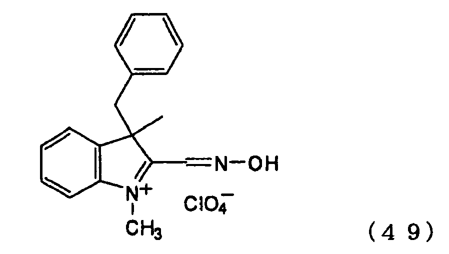

Some of the crystals were sampled, and their melting point and the decomposition point as heat characteristics were measured by DSC analysis, whereupon the exemplified compound (2) had a decomposition point hardly distinguishable from the melting point in the vicinity of 243°C.

As light absorption characteristics, an absorption spectrum in a methanol solution was measured by a conventional method, whereupon the exemplified compound (2) showed absorption maximum (λₘₐₓ) at a wavelength of 432 nm (ε=3.68×10⁵).

A ¹H-nuclear magnetic resonance spectrum of the exemplified compound (2) in a dimethyl sulfoxide-d₆ solution was measured, whereupon peaks at chemical shifts δ(ppm,TMS) of showed peaks at 1.65(3H,s), 1.68(3H,s), 1.72(3H,s), 2.98(6H,br), 3.45-3.65(2H,m), 6.10(1 H,s), 6.74(2H,d), 7.00-7.11 (3H,m), 7.32-7.36(2H,m), 7.43-7.51 (2H,m), 7.79(1 H,d), 8.06(1 H,d) and 8.38(1 H,d) were shown.

### EXAMPLE 3

### Preparation 3 of Dye

0.72 g of the above exemplified compound (1) and 1.5 g of an azo complex represented by the following formula (50) were heated (80°C) with stirring in acetonitrile (45 ml) and completely dissolved. Then, acetonitrile was distilled off, and the precipitated crystals were collected by filtration to obtain 1.45 g of the above exemplified compound (35).

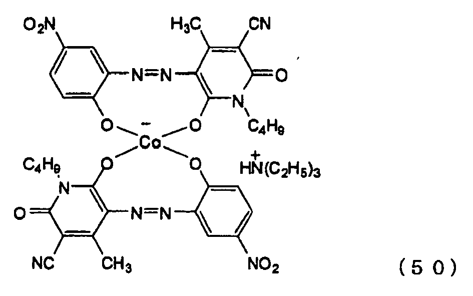

Some of the crystals were sampled, and their melting point and the decomposition point as heat characteristics were measured by DSC analysis, whereupon the exemplified compound (35) had a decomposition point hardly distinguishable from the melting point in the vicinity of 252°C.

As light absorption characteristics, an absorption spectrum in a methanol solution was measured by a conventional method, whereupon the exemplified compound (35) showed chief absorption maximum (λₘₐₓ) at a wavelength of 440 nm (ε=6.47×10⁴).

A ¹H-nuclear magnetic resonance spectrum of the exemplified compound (35) in a deuterated chloroform solution was measured, whereupon peaks at chemical shifts δ(ppm,TMS) of 0.50(6H,t), 0.78-0.86(4H,m), 0.94-1.10(4H,m), 1.67(12H,s), 2.94(6H,s), 3.31 (3H,s), 3.48(3H,s), 3.59-3.66(4H,m), 5.56(1 H,s), 6.83(2H,d), 7.28(1 H,dd), 7.43-7.56(4H,m), 7.76(1 H,dd), 7.99(2H,dd), 8.37(1 H,dd) and 9.13(2H,d) were shown.

### EXAMPLE 4

### Preparation 4 of Dye

64 g of the above exemplified compound (2) and 113 g of an azo complex represented by the following formula (50) were heated (80°C) with stirring in acetonitrile (3,390 ml) and completely dissolved. Then, acetonitrile was distilled off, and the precipitated crystals were collected by filtration to obtain 108 g of the above exemplified compound (36).

Some of the crystals were sampled, and their melting point and the decomposition point as heat characteristics were measured by DSC analysis, whereupon the exemplified compound (36) had a decomposition point hardly distinguishable from the melting point in the vicinity of 238°C.

As light absorption characteristics, an absorption spectrum in a methanol solution was measured by a conventional method, whereupon the exemplified compound (36) showed chief absorption maximum (λₘₐₓ) at a wavelength of 446 nm (ε=7.08×10⁴).

A ¹H-nuclear magnetic resonance spectrum of the exemplified compound (36) in an deuterated chloroform solution was measured, whereupon peaks at chemical shifts δ(ppm,TMS) of 0.50(6H,t), 0.79-0.88(4H,m), 0.94-1.01 (4H,m), 1.67(3H,s), 1.69(3H,s), 1.78(3H,s), 2.93(6H,s), 3.05(6H,br), 3.26-3.52(2H,m),3.58-3.66(4H,m),5.64(1H,s),6.69(2H,d),6.82(2H,d),7.05-7.30(5H,m),7.52-7.55(3H,m), 7.77(1 H,d), 7.99(2H,dd), 8.35(1 H,d) and 9.12(2H,d) were shown.

### II. PREPARATION AND EVALUATION OF OPTICAL RECORDING MEDIUM

### EXAMPLE 5: Optical recording medium in which the recording layer is a monolayer

On a polycarbonate substrate having a thickness of 0.6 mm, a track pitch of 0.4 µm, a groove width of 260 nm and a groove depth of 60 nm, a solution having the exemplified compound (36) obtained in Example 4 mixed with TFP (2,2,3,3-tetrafluoro-1-propanol) at a concentration of 1.0 wt% was applied by a spin coating method and dried at 70°C for 25 minutes to form a recording layer. The absorbance at 470nm measured with the air as a reference was 0.30. Then, on the recording layer, a AgBi_{0.2}Nd_{0.5} reflective film having a thickness of 120 nm was formed by sputtering. Further, on the reflective layer, a back plate made of a polycarbonate having a thickness of 0.6 mm was bonded by means of an ultraviolet-curable resin (SK7100 manufactured by Sony Chemical & Information Device Corporation) to prepare an optical recording medium.

On the obtained optical recording medium, random pattern recording was carried out at a linear velocity of 6.61 m/s with a minimum mark length of 204 nm using a tester (ODU-1 000 manufactured by Pulstec Industrial Co., Ltd.) at a laser wavelength of 405 nm with NA (numerical aperture) of 0.65. Recording and retrieving were carried out by a method in accordance with HD DVD-R specification Ver 1.0 as specified by the DVD Forum, and evaluation of PRSNR (partial response signal to noise ratio) and SbER (simulated bit error rate) as specified by the specification was carried out.

As a result, the recording mechanism was low to high type, and the optimum recording power was 7.2 mW. The PRSNR of the optical recording medium was 35.0, which was higher than 15 specified by the specification. Further, the SbER was 3.0×10⁻¹¹, which was within 5.0×10⁻⁵ stipulated by the specification and was favorable.

### COMPARATIVE EXAMPLE 1

An optical recording medium was prepared in the same manner as in Example 5 except that a compound represented by the following formula (51) was used as the dye, and evaluation was carried out under the same conditions as in Example 5.

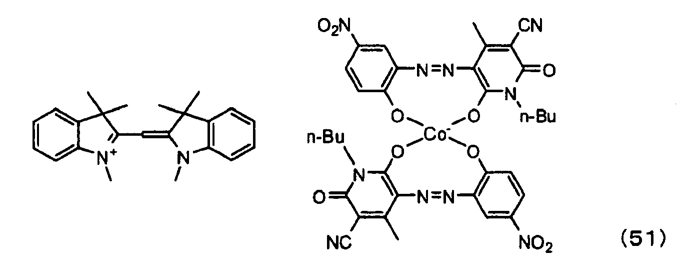

As a result, the recording mechanism was low to high type, and the PRSNR was 32.0 and the SbER was 4.5×10⁻¹¹, which were within the ranges of the specification. However, the optimum recording power was 8.8 mW, thus indicating a significant difference in the recording sensitivity with Example 5.

### EXAMPLE 6: Optical recording medium having two recording layers

A double layer medium was prepared using the exemplified compound (36) as Layer 0 dye and using a compound represented by the following formula (52) as Layer 1 dye, and recording characteristics of the respective recording layers i.e. Layer 0 and Layer 1 were evaluated. Here, Layer 0 means "a first recording layer" (a recording layer closer to the laser incidence side), and Layer 1 means "a second recording layer" (a recording layer farther from the laser incidence side).

A process for preparing a medium is shown below. A substrate and a stamper were preliminarily prepared so that of the substrate used, the track pitch was 0.4 µm, the groove depth for Layer 0 was 60 nm and the groove depth for Layer 1 was 65 nm, and the groove width for both was 260 nm.

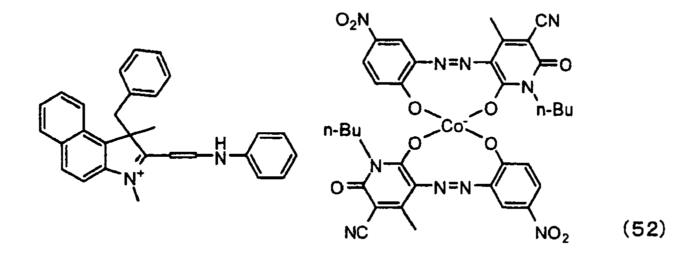

On a polycarbonate substrate having a thickness of 0.59 mm and having grooves for Layer 0 formed thereon, a solution having the above exemplified compound (36) mixed at a concentration of 1.0 wt% with TFP (2,2,3,3-tetrafluoro-1-propanol) was applied by a spin coating method and dried at 70°C for 25 minutes to form a Layer 0 recording layer. The absorbance at 470 nm was 0.280.

Then, as a translucent reflective film to be adjacent to Layer 0, a film of AgBi₁₀ was formed in a thickness of 45 nm by a sputtering method.

Then, on the surface of the translucent reflective film, an ultraviolet-curable resin (SD6036 manufactured by Dainippon Printing Ink Manufacturing) was applied in a thickness of about 22 µm by spin coating. Further, on a stamper made of an amorphous cyclic polyolefin resin to transfer grooves for Layer 1, an ultraviolet-curable resin (MPZ388 manufactured by Nippon Kayaku Co., Ltd.) was applied in a thickness of about 8 µm by spin coating. Then, these applied surfaces were bonded. After bonding, UV light at 240 mJ/cm² was applied from the amorphous cyclic polyolefin resin stamper side to cure the two ultraviolet-curable resins simultaneously. Then, the amorphous cyclic polyolefin resin stamper was peeled off from the ultraviolet-curable resin to form an interlayer having grooves for Layer 1 (groove depth: 65 nm, groove width: 260 nm, track pitch: 0.4 µm) transferred on the peeled surface. The thickness of the entire interlayer after UV curing was 28 µm.

Then, on the interlayer having the grooves for Layer 1 formed thereon, a compound represented by the above formula (52) was applied by a spin coating method in the same manner as formation of Layer 0 and dried at 70°C for 25 minutes to form a Layer 1 recording layer. The absorbance of the Layer 1 dye alone at 470 nm was 0.300. The absorbance of the Layer 1 dye alone means the absorbance of the Layer 1 dye in a state where no Layer 0 dye nor translucent reflective film was formed, i.e. in a case where the substrate, the interlayer and the Layer 1 dye were laminated in this order.

Further, as a total reflective film to be adjacent to Layer 1, a film of AgCu_{0.9}Nd_{0.7} was formed in a thickness of 120 nm by a sputtering method.

Finally, the total reflective layer and a back plate made of a polycarbonate having a thickness of 0.6 mm was bonded by an ultraviolet-curable resin for bonding and cured to prepare an optical recording medium having two recording layers.

The recording conditions are the same as those of the monolayer medium, and recording was carried out at a linear velocity of 6.61 m/s with a minimum mark length of 204 nm using a tester ODU-1000 manufactured by Pulstec Industrial Co., Ltd.) at a laser wavelength of 405 nm with NA (numerical aperture) of 0.65. Recording and retrieving were carried out by a method in accordance with HD DVD-R specification Ver 1.0 as specified by the DVD Forum, and evaluation of PRSNR and SbER as specified by the specification was carried out.

As a result of the evaluation, the recording mechanism of both Layer 0 and Layer 1 was low to high type. Of Layer 0, the optimum recording power was 10.0 mW, PRNSR was 23.0 and SbER was 2.1 ×¹⁰⁻⁸, and of Layer 1, the optimum recording power was 13.0 mW, PRNSR was 24.5 and SbER was 5.1 ×10⁻⁸. The value of PRSNR of both Layer 0 and Layer 1 was much higher than 15.0 of the specification and was favorable, and SbER also was within 5.0×10⁻⁵ of the specification, and both Layer 0 and Layer 1 sufficiently secured recording characteristics required for a double layer medium.

### COMPARATIVE EXAMPLE 2

A double layer medium was prepared under the same conditions as in Example 6 except that the above exemplified compound (51) was used as the Layer 0 dye and the evaluation was carried out under the same conditions as in Example 6.

As a result, the optimum recording power of Layer 0 was 12.5 mW, thus indicating the sensitivity being inferior to Example 6. Further, PRNSR was 13.8 and SbER was 4.2×10⁻³, and the medium could not satisfy the specification in view of recording characteristics also.

### INDUSTRIAL APPLICABILITY

The field to which the present invention is applicable is not particularly limited, and the present invention can suitably be utilized in the field of an optical recording medium on which recording/retrieving is carried out by means of a laser beam having a short oscillation wavelength such as a blue laser beam.

The entire disclosure of Japanese Patent Application No. 2007-049968 filed on February 28, 2007 including specification, claims, drawings and summary is incorporated herein by reference in its entirety.

## Claims

1. A cyanine dye represented by the following formula (I): 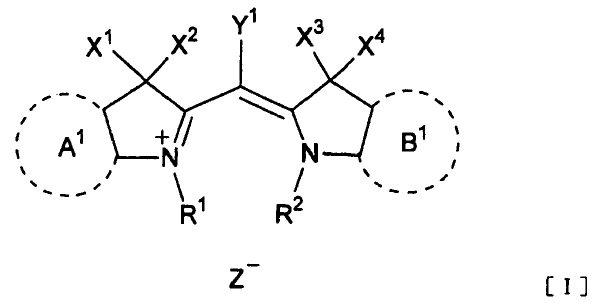 wherein each of A¹ and B¹ which are independent of each other, is an aromatic ring which may have a substituent, provided that at least one aromatic ring of A¹ and B¹ contains a nitrogen atom; each of R¹ and R² which are independent of each other, is a substituent, provided that R¹ and/or R² may be bonded to other cation; each of X¹, X², X³ and X⁴ which are independent of one another, is an organic group, provided that a pair of X¹ and X², and/or a pair of X³ and X⁴, may be mutually bonded to form a cyclic structure; Y¹ is a hydrogen atom or an organic group; and Z⁻ is an anion.

2. The cyanine dye according to Claim 1, wherein in the formula (I), Z- is an anion of an azo metal complex.

3. The cyanine dye according to Claim 1 or 2, wherein in the formula (I), at least one of X¹, X², X³ and X⁴ is an alkyl group substituted by a heterocyclic ring or an aromatic ring.

4. The cyanine dye according to Claim 1 or 2, wherein in the formula (I), A¹ is a benzene ring, B¹ is a pyridine ring, and one of X¹, X², X³ and X⁴ is an alkyl group substituted by an aromatic ring.

5. The cyanine dye according to Claim 4, wherein in the formula (I), X¹, X², X³ and X⁴ other than X¹, X², X³ or X⁴ which is the alkyl group substituted by an aromatic ring, and R¹ and R², are C₁₋₃ alkyl groups, and Y¹ is a hydrogen atom.

6. The cyanine dye according to Claim 5, wherein in the formula (I), either one of X¹ and X² is an alkyl group substituted by an aromatic ring.

7. An optical recording medium comprising a substrate and a recording layer capable of recording or retrieving information by irradiation with light, formed on the substrate, wherein the recording layer contains the cyanine dye as defined in any one of Claims 1 to 6.

8. The optical recording medium according to Claim 7, on which recording and retrieving are carried out by light having a wavelength of at least 300 nm and at most 500 nm.
